# EUROPÄISCHE PATENTSCHRIFT

(11) **EP 2 931 629 B1**
(45) Veröffentlichungstag und Bekanntmachung des Hinweises auf die Patenterteilung: **28.08.2019**
(21) Anmeldenummer: 13799256.6
(22) Anmeldetag: 26.11.2013
(51) Int. Cl.: B65D 85/804

(54) **SYSTEM AUFWEISEND EIN ZUBEREITUNGSGERÄT UND EINE PORTIONSKAPSEL ZUR HERSTELLUNG EINES GETRÄNKS**
SYSTEM COMPRISING A PREPARATION MACHINE AND A PORTION CAPSULE FOR PRODUCING A BEVERAGE
SYSTEME COMPRENANT UNE MACHINE DE PREPARATION ET UNE CAPSULE-DOSETTE POUR LA PREPARATION D'UNE BOISSON

(30) Priorität: 14.12.2012 DE 102012223291
(43) Veröffentlichungstag der Anmeldung: 21.10.2015
(73) Patentinhaber: K-fee System GmbH, 51469 Bergisch Gladbach (DE)
(72) Erfinder: EMPL, Günter, 51429 Bergisch Gladbach (DE)
(74) Vertreter: Wolff, Felix
(86) Internationale Anmeldenummer: PCT/EP2013/074716
(87) Internationale Veröffentlichungsnummer: WO 2014/090567

(56) Entgegenhaltungen:
- EP-A1- 0 468 079
- EP-A1- 2 412 645
- WO-A1-2012/123106
- DE-A1-102004 056 224
- DE-A1-102010 027 485
- DE-A1-102011 012 881
- DE-A1-102012 105 282
- FR-A1- 2 556 323
- US-A1- 2011 097 450

## Beschreibung

Die vorliegende Erfindung betrifft ein System aufweisend ein Zubereitungsgerät und eine Portionskapsel zur Herstellung eines Getränks, wobei die Portionskapsel einen Kapselkörper mit einem Kapselboden und einer Einfüllseite aufweist, wobei zwischen dem Kapselboden und der Einfüllseite ein Hohlraum zur Aufnahme eines pulverförmigen oder flüssigen Getränkesubstrats ausgebildet ist und wobei zwischen dem Getränkesubstrat und dem Kapselboden ein Filterelement angeordnet ist.

Solche Portionskapseln sind aus dem Stand der Technik allgemein bekannt. Beispielsweise sind in den Druckschiften EP 1792850 B1, EP 1344722 A1 und US 2003/0172813 A1 gattungsgemäße Portionskapseln zur Kaffee- und Espressozubereitung offenbart. Als weiterer Stand der Technik sind ferner die Druckschriften DE 10 2011 012881 A1, DE 10 2010 027485 A1, WO 2012/123106 A1, US 2011/097450 A1, EP 0468079 A1, FR 2556323 A1, DE 10 2004 056224 A1 sowie EP 2412645 A1 anzusehen. Ein System gemäß dem Oberbegriff des Anspruchs 1 ist z.B. in WO 2012/123106 A1 und US 2011/0097450 A1 beschrieben.

Derartige Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Deckelfolie aufgesiegelt oder aufgeklebt wird und einen geschlossenen Kapselboden, wobei zwischen dem Getränkesubstrat und dem Kapselboden ein sich beispielsweise gegen den Kapselboden abstützendes Filterelement angeordnet ist. Diese Filterelemente sind entweder aus einem thermoplastischen Kunststoff gespritzt oder aus einer Kunstofffolie tiefgezogen oder geprägt.

Für die Zubereitung eines Kaffeegetränkes wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Abflussorgan und/oder ein Öffnungsmittel, beispielsweise einem Anstechdorn, geöffnet oder eine bereits in dem Kapselboden vorhandene Öffnung wird von dem Abflussorgan und/oder Öffnungsmittel durchdrungen. Nach dem Abdichten der Brühkammer wird die mit einer Verschlussfolie verschlossene Einfüllseite der Portionskapsel mittels mindestens eines Einstechmittels angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffeepulver. Dieser Druck wirkt ferner auch auf das zwischen dem Kaffeepulver und dem Kapselboden und vor dem eingestochenen Kapselauslauf liegende Filterelement ein. Das fertiggestellte Getränk strömt vorzugsweise entlang des Abflussorgans und/oder des Öffnungsmittels aus der Brühkammer heraus in ein Auffangorgan, beispielsweise eine Tasse oder einen Becher.

Es war deshalb die Aufgabe der vorliegenden Erfindung, eine Portionskapsel mit einer Filteranordnung zur Verfügung zu stellen, welche im Vergleich zum Stand der Technik einfacher zu fertigen ist.

Gelöst wird diese Aufgabe mit einem System gemäß Anspruch 1.

Im Vergleich zum Stand der Technik hat erfindungsgemäß die Portionskapsel den Vorteil, dass kein oder kein großer Abstand zwischen dem Filterelement und dem Kapselboden vorgesehen werden muss. Dadurch kann die Portionskapsel bei gleicher Getränkesubstratmenge kleiner ausfallen und/oder die Getränkesubstratmenge kann erhöht werden. Das Filterelement selbst kann eine einfachere Geometrie aufweisen. Es war überaus erstaunlich und nicht zu erwarten, dass das Filterelement angestochen, aber nicht durchstochen werden kann, ohne dass die Getränkequalität leidet. Die Getränkeherstellungsvorrichtung kann mit größeren Toleranzen hergestellt werden. Beispielsweise kann der Öffnungsdorn länger gestaltet werden, wodurch sichergestellt ist, dass die Kapsel vollständig geöffnet ist, bevor heißes Wasser in die Portionskapsel eindringt.

Die Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Deckelfolie aufgesiegelt oder aufgeklebt wird, einen Seitenwandbereich, der in der Regel zylindrisch oder kegelstumpfförmig vorgesehen ist, und einen Kapselboden, wobei zwischen dem Getränkesubstrat und dem Kapselboden ein sich vorzugsweise gegen den Kapselboden abstützendes Filterelement angeordnet ist.

Diese Filterelemente sind steif d.h. beispielsweise entweder aus einem thermoplastischen Kunststoff gespritzt oder aus einer Kunstofffolie tiefgezogen oder geprägt. Das Filterelement kann Versteifungsrippen und/oder Kanäle für die Flüssigkeitsführung aufweisen. Das Filterelement kann, insbesondere in seinem Zentralbereich eine Einbuchtung aufweisen, in die das Abflussorgan und/oder das Öffnungsmittel eingeführt wird, bevor es das Filterelement berührt und dabei an-, durchsticht und/oder relativ zum Kapselkörper bewegt. Das Filterelement weist mindestens einen Bereich auf, in dem das Getränkesubstrat zurückgehalten wird, der aber von der Extraktionsflüssigkeit durchströmt werden kann. Beispielsweise ist dies ein Bereich, der eine Vielzahl von Löchern aufweist, deren Querschnitt so gewählt ist, dass die Getränkesubstratpartikel nicht oder nicht nennenswert durchgelassen werden, die aber von dem Extraktionsmittel, beispielsweise dem heißen Wasser durchströmt werden. Das Filterelement kann einen Bereich aufweisen, der nicht von dem Extraktionsmittel durchströmt wird. Dieser Bereich kann sich beispielsweise oberhalb des Bereichs befinden, in den das Abflussorgan bzw. das Öffnungsmittel eindringt. Dieser Bereich kann auch aus einem anderen Material als das restliche Filterelement gefertigt sein und/oder eine andere Materialstärke aufweisen. Beispielsweise kann dieser Bereich eine höhere Elastizität aufweisen als das restliche Filterelement. Insbesondere beim An- oder Durchstechen wird dieser Bereich dann zumindest zeitweise plastisch oder elastisch verformt. Das Filterelement kann eben sein.

Zwischen dem Filterelement und dem Kapselboden kann ein Hohlraum vorgesehen sein, d.h. das Filterelement kann zumindest abschnittsweise in einem gewissen Abstand zu dem Kapselboden angeordnet sein. Beispielsweise kann das Filterelement nur in seinem Randbereich auf dem Kapselboden aufliegen und/oder nur im Randbereich mit der Seitenwand der Portionskapsel verbunden sein.

Erfindungsgemäß ist das Filterelement in der Portionskapsel aber so vorgesehen, dass das Abflussorgan und/oder ein Öffnungsmittel des Zubereitungsgerätes das Filterelement bei der Herstellung des Getränkes berührt und dabei ansticht aber nicht durchsticht.

Für die Zubereitung eines Kaffeegetränkes wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Abflussorgans und/oder eines Öffnungsmittels geöffnet oder eine bereits in dem Kapselboden vorhandene Öffnung wird von dem Abflussorgan und/oder Öffnungsmittel durchdrungen. Dabei berührt das Abflussorgan und/oder ein Öffnungsmittel das Filterelement und stich es an, aber sticht es nicht durch.

Nach dem Abdichten der Brühkammer wird die mit einer Verschlussfolie verschlossene Einfüllseite der Portionskapsel mittels mindestens eines Einstechmittels angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffeepulver. Dieser Druck wirkt ferner auch auf das zwischen dem Kaffeepulver und dem Kapselboden und vor dem eingestochenen Kapselauslauf liegende Filterelement ein. Das fertiggestellte Getränk strömt vorzugsweise entlang des Abflussorgans und/oder des Öffnungsmittels aus der Brühkammer heraus in ein Auffangorgan, beispielsweise eine Tasse oder einen Becher.

Vorzugsweise ist die Portionskapsel hermetisch dicht. Dies bedeutet, dass das in der Portionskapsel befindliche Getränke- oder Lebensmittelpulver, beispielsweise Kaffeepulver, Suppenpulver oder Tee, vor dem Extraktionsvorgang im Wesentlichen aromadicht gegenüber der Umwelt verschlossen ist. Die Portionskapsel muss aber nicht hermetisch dicht sein, sondern kann auch, vor deren Verwendung in einer hermetisch dichten Verpackung vorgesehen sein, die dann, beispielsweise manuell geöffnet wird.

Das Filterelement wird vorzugsweise einfach in den Kapselkörper eingelegt und liegt anschließend entweder locker auf dem Kapselboden auf oder wird mit diesem und/oder der Seitenwand der Kapsel verbunden, insbesondere bevor das Getränkesubstrat in den Kapselkörper eingefüllt wird.

Der Kapselkörper ist bevorzugt kegelstumpfförmig oder zylindrisch geformt und wird beispielsweise aus Kunststoff, einem Naturstoff und/oder einem biologisch abbaubaren Werkstoff aus einer tiefgezogenen Kunststofffolie oder im Kunststoffspritzverfahren hergestellt. Der Kapselkörper weist vorzugsweise auf der Einfüllseite einen Kragenrand auf, auf den eine Deckelfolie aufgesiegelt oder aufgeklebt ist. Alternativ ist denkbar, dass der Kapselkörper und ein Kapseldeckel mittels eines mechanischen Verfahrens miteinander verbunden sind. Der Boden der Portionskapsel ist vorzugsweise geschlossen und wird vorzugsweise erst in der Brühkammer mittels eines von außen auf den Portionskapselboden wirkendes Abflussorgan und/oder ein Öffnungsmittel zur Erzeugung einer Auslauföffnung perforiert. Alternativ wäre aber ebenso denkbar, dass der Boden der Portionskapsel bereits werksseitig mit einer Auslauföffnung versehen ist, welche mittels einer Dichtfolie vorzugsweise verschlossen ist. Die Dichtfolie ist dann beispielsweise mittels des Perforationsmittels perforierbar oder von Hand vom Kapselboden abziehbar. Bei der Dichtfolie handelt es sich vorzugsweise um eine Kunststofffolie, die mindestens eine Barriereschicht, beispielsweise eine Metallschicht, insbesondere eine Aliminium-Schicht aufweist. Die Kunststofffolie weist vorzugsweise auf ihrer der Kapsel zugewandten Seite eine "Peel-Schicht" auf, um die Kunststofffolie vergleichsweise leicht von dem Kapselboden lösen zu können.

Die Auslauföffnung ist vorzugsweise so groß vorgesehen, dass sie ein gegebenenfalls vorhandenes Abflussorgan und/oder ein Öffnungsmittel berührungsfrei aufnehmen kann. Besonders bevorzugt ist die Auslauföffnung so groß vorgesehen, dass an ihr, beim Ausströmen des fertiggestellten Getränkes kein nennenswertes Druckverlust entsteht, insbesondere dass es zu keiner nennenswerten Verwirbelung des fertiggestellten Getränkes kommt, der zu einem Gaseintrag in das Getränk und damit zur Schaumbildung führen könnte.

Gemäß eines weiteren Gegenstands oder einer weiteren Ausführungsform der vorliegenden Erfindung ist vorgesehen, dass das Filterelement im Hohlraum der Portionskapsel angeordnet ist und auf einer der Einfüllseite zugewandten Seite des Kapselbodens aufliegt. Vorteilhafterweise werden die Herstellungskosten für die Portionskapsel erheblich reduziert, da das Filterelement einfach nur locker in die Portionskapsel eingelegt wird. Eine Fixierung des Filterelements erfolgt vorzugsweise durch die Getränkesubstanz, welche beim Befüllen der Portionskapsel auf dem Filterelement angeordnet wird und somit das Filterelement festklemmt.

Gemäß einer weiteren bevorzugten Ausführungsform der vorliegenden Erfindung ist vorgesehen, dass der Randbereich sich zumindest teilweise entlang eines Seitenwandbereichs des Kapselkörpers erstreckt, wobei sich der Seitenwandbereich zwischen der Einfüllseite und dem Kapselboden erstreckt.

Gemäß einer weiteren bevorzugten Ausführungsform der vorliegenden Erfindung ist vorgesehen, dass das Filterelement den Kapselboden vollständig oder nur teilweise überdeckt. Insbesondere ist es ausreichend, wenn das Filterelement ausschließlich im Bereich der Perforierung bzw. im Bereich einer Auslassöffnung im Kapselboden angeordnet ist.

Gemäß einer weiteren bevorzugten Ausführungsform der vorliegenden Erfindung ist vorgesehen, dass das Filterelement am Kapselboden befestigt ist, wobei das Filterelement vorzugsweise stoffschlüssig am Kapselboden, insbesondere durch Siegeln befestigt ist. Vorteilhafterweise wird somit ein Verrutschen des Filterelements verhindert. Diese Befestigung erfolgt vorzugsweise durch Ultraschallschweißen.

Gemäß einer weiteren bevorzugten Ausführungsform der vorliegenden Erfindung ist vorgesehen, dass das Filterelement in einem Randbereich des Kapselbodens am Kapselboden befestigt ist und/oder dass das Filterelement in einem Randbereich des Filterelements am Seitenwandbereich befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements weiterhin ermöglicht wird.

Gemäß einer weiteren bevorzugten Ausführungsform der vorliegenden Erfindung ist vorgesehen, dass der Kapselboden eine Ausbuchtung in eine der Einfüllseite entgegengesetzte Richtung aufweist. Vorteilhafterweise dient die Ausbuchtung zur Aufnahme des Perforierungsmittels.

Gemäß einer weiteren bevorzugten Ausführungsform der vorliegenden Erfindung ist vorgesehen, dass der Kapselboden eine Sollbruchstelle aufweist, welche dazu vorgesehen ist, infolge eines mechanischen Kontakts mit einem äußeren Perforationsmittel aufzureißen, wobei die Sollbruchstelle vorzugsweise eine Mehrzahl von sternförmig um einen zentralen Punkt des Kapselbodens angeordnete Schwächungslinien umfasst. Der Kapselboden weist entlang der Schwächungslinien vorzugsweise eine reduzierte Materialstärke auf und/oder ist entlang der Schwächungslinien perforiert. In vorteilhafter Weise wird durch die Realisierung der Sollbruchstelle die Perforation des Kapselbodens begünstigt. Dies hat ferner den Vorteil, dass eine weniger scharfe Perforierungsspitze zur Perforierung des Kapselbodens Verwendung finden kann, so dass die Gefahr einer Beschädigung des Filterelements beim Anheben des Filterelements durch die Perforierungsspitze reduziert wird. Insbesondere reicht nun ein stumpfes Perforierungsmittel zur Perforation des Kapselbodens aus.

Gemäß einer weiteren bevorzugten Ausführungsform weist der Kapselboden permanent eine Ausgangsöffnung auf, welche vorzugsweise mit einer Folie abgedichtet ist, wobei die Folie besonders bevorzugt eine Abziehlasche zum Abziehen der Folie von Hand aufweist. Eine Perforation des Kapselbodens mittels eines äußeren Perforationsmittel ist hierbei vorteilhafterweise nicht erforderlich. Vor dem Einlegen der Portionskapsel in die Brühkammer wird die Folie mittels der Abziehlasche einfach vom Kapselboden abgezogen und der Brühvorgang kann gestartet werden. Diese Ausführungsform hat den Vorteil, dass die Getränkeflüssigkeit nicht unter hohem Druck aus der Ausgangsöffnung herausfließt und somit die Schaumbildung ("Crema"), insbesondere bei der Herstellung von amerikanischem Kaffee oder Tee, verhindert wird.

Ein weiterer bevorzugten Gegenstand der vorliegenden Erfindung ist ein Verfahren zur Herstellung eines Getränks mit einer Portionskapsel, wobei in einem ersten Verfahrensschritt die Portionskapsel mit einem starren Filterelement bereitgestellt wird, wobei in einem zweiten Verfahrensschritt der Kapselboden von einem Abflussorgan und/oder ein Öffnungsmittel durchdrungen wird und in einem dritten Verfahrensschritt das Filterelement von dem Abflussorgan und/oder dem Öffnungsmittel dem Filterelement angestochen, durchstochen und/oder relativ zu dem Kapselkörper bewegt wird.

Dieses Anstechen, Durchstechen und/oder Bewegen relativ zu dem Kapselkörper erfolgt vorzugsweise beim Einführen der Portionskapsel in die Brühkammer und/oder beim Schließen der Brühkammer.

Die zu einem Gegenstand der vorliegenden Erfindung gemachten Ausführungen gelten für die anderen Gegenstände gleichermaßen und umgekehrt.

Ein weiterer Gegenstand der vorliegenden Erfindung ist die Verwendung einer Portionskapsel zur Herstellung eines Getränks, vorzugsweise zur Herstellung eines Kaffee-, Kakao-, Tee- und/oder Milchgetränks.

Die zu einem Gegenstand der vorliegenden Erfindung gemachten Ausführungen gelten für die anderen Gegenstände gleichermaßen und umgekehrt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
- **Figur 1**: zeigt einen Längsschnitt durch eine Portionskapsel gemäß einer ersten Ausführungsform der vorliegenden Erfindung, die für die Zubereitung von Espresso eingerichtet ist.
- **Figur 2**: zeigt einen Längsschnitt durch eine in einer geschlossenen Brühkammer liegende Portionskapsel gemäß der ersten Ausführungsform der vorliegenden Erfindung
- **Figuren 3a, 3b**: zeigen schematische Schnittbildansichten einer Portionskapsel gemäß einer zweiten Ausführungsform der vorliegenden Erfindung.
- **Figuren 4a, 4b**: zeigen schematische Schnittbildansichten einer Portionskapsel.

- **Figuren 5a, 5b**: zeigen schematische Schnittbildansichten einer Portionskapsel gemäß einer dritten Ausführungsform der vorliegenden Erfindung.
- **Figuren 6a, 6b**: zeigen schematische Schnittbildansichten einer Portionskapsel.

- **Figuren 7a, 7b**: zeigen schematische Aufsichten eines Kapselbodens einer Portionskapsel.

- **Figur 8**: eine Draufsicht eines Filterelementes
In den verschiedenen Figuren sind gleiche Teile stets mit den gleichen Bezugszeichen versehen und werden daher in der Regel auch jeweils nur einmal benannt bzw. erwähnt.

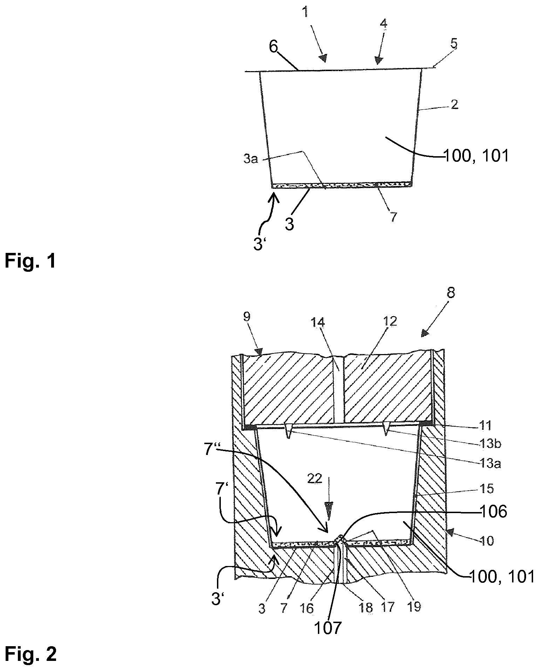

In **Figur 1** ist eine Portionskapsel gemäß einer ersten Ausführungsform der Erfindung dargestellt. Die Portionskapsel 1 umfasst einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt oder geklebt ist. Zwischen dem Kapselboden 3 und der Deckelfolie 6 ist somit ein, vorzugsweise luft- und aromadicht verschlossener Hohlraum 100, ausgebildet, welcher mit einer pulver- und granulatförmigen Getränkesubstanz 101 gefüllt ist. Die Getränkesubstanz 101 umfasst dabei beispielsweise ein Kaffee-, Kakao-, Tee- und/oder Milchpulver (bzw. -granulat). Auf der Innenseite 3a des geschlossenen Kapselkörperbodens 3, d.h. innerhalb des Hohlraums 100, ist ein starres Filterelement 7, bestehend aus einem Kunststoffmaterial angeordnet. Das Filterelement 7 liegt entweder lose auf der Innenseite 3a des Kapselbodens 3 auf oder ist fest, d.h. vorzugsweise stoffschlüssig, mit der Innenseite 3a des Kapselkörperbodens 3 verbunden. In der zweiten Variante ist das Filterelement 7 insbesondere nur in einem Randbereich 3' des Kapselbodens 3 am Kapselboden 3 stoffschlüssig befestigt. Das Filterelement ist in dem vorliegenden Fall zumindest teilweise starr ausgeführt. Beispielweise ist das Filterelement ein Gieß- Spritzgieß-, Tiefzieh- und/oder Prägeteil.

In **Figur 2** ist eine Portionskapsel 1 gemäß der in Figur 1 illustrierten ersten Ausführungsform der vorliegenden Erfindung dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Öffnungsdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Ferner wird beim Schließen der Brühkammer 8 der Kapselboden 3 von dem als Öffnungsdorn 16 ausgebildeten Abflussorgan und/oder ein Öffnungsmittel perforiert, so dass eine Ausgangsöffnung 107 in der Portionskapsel 1 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Öffnungsdorn 16 auf seiner Mantelfläche die Ablaufrillen 17 auf. In der Darstellung ist der Boden 3 der in der Brühkammer 9, 10 befindlichen Portionskapsel 1 von dem Öffnungsdorn 16 des zweiten Brühkammerelementes durchstochen und das über der Einstichstelle liegende Filterelement 7 wird von der Einstechspitze 19 des Öffnungsdornes 16 leicht angehoben, und erfindungsgemäß angestochen jedoch nicht durchstochen. Der Kapselboden 3 weist in seinem zentralen Punkt 106, in welchem der Kapselboden 3 von dem Öffnungsdorn 16 perforiert wird, optional eine Sollbruchstelle 104 auf, so dass ein vergleichsweise stumpfer Öffnungsdorn 16 zur Perforation des Kapselbodens 3 ausreichend ist.

Nach dem Eindringen des Abflussorgan und/oder ein Öffnungsmittel in die Portionskapsel strömt die Flüssigkeit, bei der Herstellung von Kaffee beispielsweise heißes Wasser, in die Kapsel 1 ein. In der Kapsel durchströmt diese Flüssigkeit das Getränkesubstrat 101 und extrahiert und/oder löst die für die Getränkeherstellung benötigten Substanzen aus dem Getränkesubstrat 101 aus. Die Strömung der Flüssigkeit in dem Getränkesubstrat 101 ist durch das Bezugszeichen 22 illustriert. Danach strömt das resultierende Getränk durch das zwischen dem Getränkesubstrat 101 und das auf dem Kapselboden 3 angeordnete Filterelement 7, welches verhindert, dass Bestandteile des Getränkesubstrates 101 partikelförmig in das resultierende Getränk gelangen und über die von dem Öffnungsdorn 16 in den Kapselboden 3 gestochene Öffnung und über die Ablaufrillen 17 des Öffnungsdornes 16 weiter in ein Auffanggefäß, beispielsweise eine Tasse oder Kanne, gelangen.

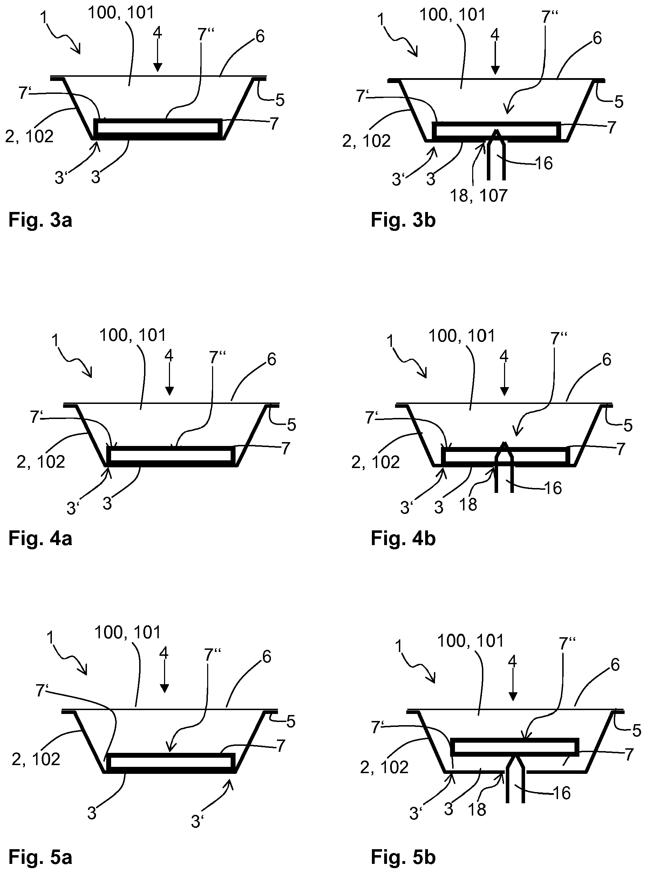

In **Figuren 3a und 3b** sind schematische Schnittbildansichten einer Portionskapsel 1 gemäß einer zweiten Ausführungsform der vorliegenden Erfindung dargestellt, die zweite Ausführungsform gleicht im Wesentlichen der in Figuren 1 und 2 illustrierten ersten Ausführungsform, wobei das Filterelement 7 wiederum starr ausgebildet ist. In Figur 3a ist die Portionskapsel 1 in ihrer Ausgangsposition dargestellt, während sie in Figur 3b von dem Perforierungsmittel 16 perforiert dargestellt ist (die Portionskapsel 1 befindet sich in Figur 3b in einer nicht weiter dargestellten Brühkammer 8). Beim Eindringen des Perforierungsmittels 16 in die Portionskapsel wird das Filterelement 7, hier in seinem Zentralbereich 7" erfindungsgemäß angestochen, jedoch nicht durchstochen. Gleichzeitig kann das Filterelement etwas relativ zu dem Kapsel körper 2 bewegt werden.

In **Figuren 4a und 4b** sind schematische Schnittbildansichten einer Portionskapsel 1 dargestellt, wobei die Portionskapsel im Wesentlichen identisch zu der in Figuren 3a und 3b illustrierten Portionskapsel ist. Das Filterelement 7 ist dabei wiederum starr ausgebildet und wird von dem Perforationsmittel 16 nicht nur ansondern durchstochen.

In **Figuren 5a und 5b** schematische Schnittbildansichten einer Portionskapsel 1 gemäß einer dritten Ausführungsform der vorliegenden Erfindung dargestellt, wobei die Portionskapsel im Wesentlichen der in Figuren 4a und 4b illustrierten Portionskapsel gleicht. Wenn der Kapselboden 3 durch das Perforierungsmittel 16 perforiert wird oder das Perforierungsmittel durch eine bereits vorhandene Öffnung im Kapselboden stößt, wird das Filterelement 7 durch das Perforierungsmittel 16 vom Kapselboden 3 abgehoben. Das Filterelement wird dabei an- aber nicht durchstochen.

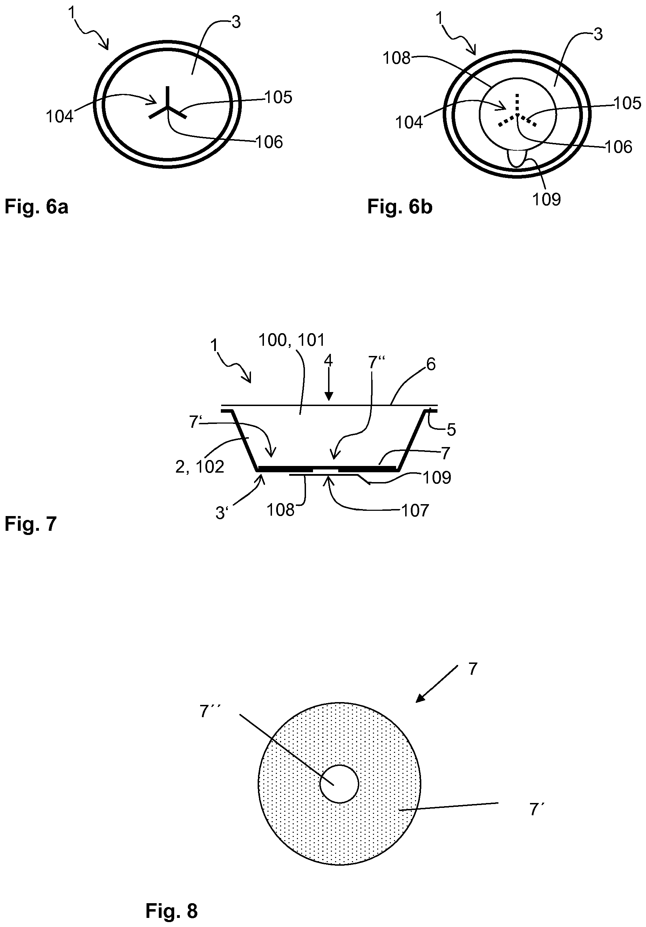

In **Figuren 6a und 6b** ist eine Ansicht eines Kapselbodens 3 einer Portionskapsel 1 dargestellt, die Portionskapsel gleicht im Wesentlichen der in Figuren 1 und 2 illustrierten Portionskapsel, wobei die Portionskapsel 1 in Figuren 6a und 6b von "unten" dargestellt ist. In dieser Ansicht ist die optionale Sollbruchstelle 104 zu erkennen, welche drei Schwächungslinien 105 umfasst, die sternförmig und in radialer Richtung um den zentralen Punkt 106 auf dem Kapselboden 3 herum angeordnet sind. Entlang der Schwächungslinien 105 weist der Kapselboden 3 eine reduzierte Materialstärke auf und/oder ist der Kapselboden 3 vorperforiert, um eine Perforation in der Brühkammer 8 zu begünstigen. Damit das Aroma der Getränkesubstanz 101 auch bei einem vorperforierten Kapselboden 3 über längere Lagerzeiten aufrecht erhalten bleibt, ist der Kapselboden 3 zumindest im Bereich der Sollbruchstelle 104 vorzugsweise mit einer perforierbaren oder von Hand abziehbaren Folie 108 versiegelt. Die Folie 108 klebt dazu beispielsweise auf der Außenseite des Kapselbodens 3 und ist mit einer Abziehlasche 109 versehen, welche nicht am Kapselboden 3 klebt und an welcher die Folie 108 von Hand abgezogen werden kann. Eine beispielhafte Ausführungsform mit Schwächungslinien 105 in Form von Perforationen im Kapselboden 3, sowie mit einer Folie 108 ist in Figur 8b illustriert.

In **Figur 7** ist eine Schnittbildansicht einer Portionskapsel 1 dargestellt. Die Portionskapsel gleicht im Wesentlichen der in Figur 1 dargestellten Portionskapsel, wobei die Portionskapseln 1 mit einer permanenten Ausgangsöffnung 107 im Kapselboden 3 ausgestattet ist, welche in der Ausgangslage mit der Folie 108 abgedichtet ist. Sollbruchstellen weist die Portionskapsel 1 daher nicht auf. Die Folie 108 weist dabei ebenfalls die Abziehlasche 109 zum Abziehen der Folie 108 von Hand auf. Eine Perforation des Kapselbodens 3 mittels eines äußeren Perforationsmittels 16 ist nicht vorgesehen.

Vielmehr wird dem Einlegen der Portionskapsel 1 in die Brühkammer 8 wird die Folie 108 mittels der Abziehlasche 109 einfach vom Kapselboden 3 abgezogen und der Brühvorgang kann anschließend direkt und ohne Perforierung des Kapselbodens 3 gestartet werden.

In **Figur 8** ist ein Filterelement 7 dargestellt, das im Wesentlichen eben und im wesentlichen starr, d.h. beispielsweise aus einem Kunststoffmaterial gegossen und/oder gespritzt oder aus einer Folie tiefgezogen oder geprägt ist. Dieses Filterelement weist einen Filterbereich 7' auf, der in dem vorliegenden Fall eine Vielzahl von Ausnehmungen aufweist, deren Querschnitt so gewählt ist, dass er die Extraktionsflüssigkeit durchläßt, die Substratpartikel jedoch zurückhält. In seinem Zentralbereich 7" weist das Filterelement einen Bereich auf, der keine Ausnehmungen aufweist, d.h. der nicht von der Extraktionsflüssigkeit durchströmt wird. Dieser Bereich kann aus einem anderen Material, insbesondere einem anderen Kunststoffmaterial gefertigt sein als das restliche Filterelement. Alternativ oder zusätzlich kann der Bereich eine andere, insbesondere geringere Materialstärke aufweisen als das restliche Filterelement. Insbesondere weist der Zentralbereich 7" eine höhere Elastizität auf als das restliche Filterelement.

### Bezugszeichenliste

- 1: Portionskapsel
- 2: Kapselkörper
- 3: Kapselboden
- 3a: Kapselboden-Innenseite
- 3': Randbereich des Kapselbodens
- 4: Einfüllseite
- 5: Kragenrand
- 6: Deckelfolie
- 7: Filterelement
- 7': Filterbereich des Filterelements
- 7": Zentralbereich des Filterelements
- 8: Brühkammer
- 9: Erstes Brühkammerelement
- 10: Zweites Brühkammerelement
- 11: Dichtung
- 12: Schließkolben
- 13a: Einstechelement
- 13b: Einstechelement
- 14: Zubereitungsflüssigkeitszufuhr
- 15: Brühglocke
- 16: Abflussorgan, Öffnungsdorn, Perforierungsmittel
- 17: Auslaufrillen
- 18: Ablauf
- 19: Einstechspitze
- 20: Einbuchtung
- 21: Ausbuchtung
- 22: Zubereitungsflüssigkeitsfluss
- 23: Brühglockenboden
- 100: Hohlraum
- 101: Getränkesubstrat
- 102: Seitenwandbereich
- 104: Sollbruchstelle
- 105: Schwächungslinien
- 106: Zentraler Punkt
- 107: Ausgangsöffnung
- 108: Folie
- 109: Abziehlasche

## Patentansprüche

1. System aufweisend ein Zubereitungsgerät und eine Portionskapsel (1) zur Herstellung eines Getränks, wobei die Portionskapsel einen Kapselkörper (2) mit einem Kapselboden (3) und einer Einfüllseite Einfüllseite (4) aufweist, wobei zwischen dem Kapselboden (3) und der Einfüllseite (4) ein Hohlraum (100) zur Aufnahme eines pulverförmigen oder flüssigen Getränkesubstrats (101) ausgebildet ist und wobei zwischen dem Getränkesubstrat (101) und dem Kapselboden (3) ein Filterelement (7) angeordnet ist und bei der Herstellung des Getränks ein Öffnungsmittel (16), das Teil des Zubereitungsgerätes ist, durch den Kapselboden (3) in den Hohlraum (100) hineinragt, wobei das Filterelement (7) starr ist, wobei das Filterelement aus einer Kunststofffolie tiefgezogen, oder ein Gieß- oder Spritzgießteil ist, **dadurch gekennzeichnet, dass** das Filterelement (7) so am oder im Bereich des Kapselboden(s) (3) vorgesehen ist und das Öffnungsmittel so vorgesehen ist, dass das Öffnungsmittel (16) das Filterelement (7) bei der Herstellung des Getränkes ansticht aber nicht durchsticht.

2. System nach Anspruch 1, **dadurch gekennzeichnet, dass** das Filterelement mit dem Kapselboden (3) oder mit dem Seitenwandbereich (102) des Kapselkörpers verbunden ist.

3. System nach Anspruch 2, **dadurch gekennzeichnet, dass** der Verbund form-, kraft- und/oder stoffschlüssig ist.

4. System nach einem der vorhergehenden Ansprüche, **dadurch gekennzeichnet, dass** das Filterelement (7) in einem Randbereich (3') des Kapselbodens (3) am Kapselboden (3) befestigt ist und/oder dass das Filterelement (7) in einem Randbereich (7') des Filterelements (7) am Seitenwandbereich (102) befestigt ist.

5. System nach einem der vorhergehenden Ansprüche, **dadurch gekennzeichnet, dass** das Filterelement (7) im Hohlraum (100) angeordnet ist und auf einer der Einfüllseite (4) zugewandten Seite des Kapselbodens (3) aufliegt.

6. System nach einem der vorhergehenden Ansprüche, **dadurch gekennzeichnet, dass** das Filterelement (7) den Kapselboden (3) vollständig oder nur teilweise überdeckt.

7. System nach einem der vorhergehenden Ansprüche, **dadurch gekennzeichnet, dass** der Kapselboden (3) eine Sollbruchstelle (104) aufweist, welche dazu vorgesehen ist, infolge eines mechanischen Kontakts mit einem äußeren Perforationsmittel (16) aufzureißen.

8. System nach einem der vorhergehenden Ansprüche, **dadurch gekennzeichnet, dass** der Kapselboden (3) eine Ausgangsöffnung (107) aufweist, welche vorzugsweise mit einer Folie (108) abgedichtet ist, wobei die Folie (108) besonders bevorzugt eine Abziehlasche (109) zum Abziehen der Folie von Hand aufweist.

## Claims

1. System having a preparation appliance and a portion capsule (1) for producing a beverage, wherein the portion capsule has a capsule body (2) with a capsule base (3) and a filling side filling side (4), with a cavity (100) for accommodating a pulverulent or liquid beverage base (101) being formed between the capsule base (3) and the filling side (4), and with a filter element (7) being arranged between the beverage base (101) and the capsule base (3), and an opening means (16) which is part of the preparation appliance projecting through the capsule base (3) into the cavity (100) when the beverage is being produced, wherein the filter element (7) is rigid,wherein the filter element is thermoformed from a plastic film, or is a molded part or is an injection-molded part, **characterized in that** the filter element (7) is provided on or in the region of the capsule base (3) such that and the opening means is provided such that the opening means (16) taps the filter element (7) but does not pierce it when the beverage is being produced.

2. System according to Claim 1, **characterized in that** the filter element is connected to the capsule base (3) or to the side wall region (102) of the capsule body.

3. System according to Claim 2, **characterized in that** the connection is interlocking, force-fitting and/or cohesive.

4. System according to one of the preceding claims, **characterized in that** the filter element (7) is attached to the capsule base (3) in an edge region (3') of the capsule base (3), and/or **in that** the filter element (7) is attached to the side wall region (102) in an edge region (7') of the filter element (7).

5. System according to one of the preceding claims, **characterized in that** the filter element (7) is arranged in the cavity (100) and rests on a side of the capsule base (3) which faces the filling side (4).

6. System according to one of the preceding claims, **characterized in that** the filter element (7) completely or only partially covers the capsule base (3).

7. System according to one of the preceding claims, **characterized in that** the capsule base (3) has a predetermined breaking point (104) which is intended to tear open as a result of mechanical contact with an external perforation means (16).

8. System according to one of the preceding claims, **characterized in that** the capsule base (3) has an output opening (107) which is preferably sealed off by a film or foil (108), with the film or foil (108) particularly preferably having a pull-off tab (109) for pulling off the film or foil by hand.

## Revendications

1. Système comportant un appareil de préparation et une capsule-dosette (1) pour élaborer une boisson, dans lequel la capsule-dosette présente un corps de capsule (2) pourvu d'une base de capsule (3) et d'une face de remplissage face de remplissage (4) sur le côté remplissage, dans lequel une cavité (100) est formée entre le fond de capsule (3) et la face de remplissage (4) pour recevoir un substrat de boisson en poudre ou liquide (101) et dans lequel un élément filtrant (7) est disposé entre le substrat de boisson (101) et la base de capsule (3) et, lors de l'élaboration de la boisson, un moyen d'ouverture (16), qui fait partie de l'appareil de préparation, pénètre à travers la base de capsule (3) dans la cavité (100), dans lequel l'élément filtrant (7) est rigide, dans lequel l'élément filtrant est embouti à partir d'un film plastique ou est une pièce moulée par coulée ou par injection, **caractérisé en ce que** l'élément filtrant (7) est prévu au niveau ou dans la région du ou des fond(s) de capsule (3) et le moyen d'ouverture est prévu de manière à ce que le moyen d'ouverture (16) perce l'élément filtrant (7) sans toutefois le percer lors de l'élaboration de la boisson.

2. Système selon la revendication 1, **caractérisé en ce que** l'élément filtrant est relié au fond de capsule (3) ou à la zone de paroi latérale (102) du corps de capsule.

3. Système selon la revendication 2, **caractérisé en ce que** le composite est du type à complémentarité de forme, de force et/ou de matériau.

4. Système selon l'une des revendications précédentes, **caractérisé en ce que** l'élément filtrant (7) est fixé au fond de capsule (3) dans une zone de bord (3') du fond de capsule (3) et/ou **en ce que** l'élément filtrant (7) est fixé sur la zone de paroi latérale (102) dans une zone de bord (7') de l'élément filtrant (7).

5. Système selon l'une des revendications précédentes, **caractérisé en ce que** l'élément filtrant (7) est disposé dans la cavité (100) et repose sur une face du fond de capsule (3) qui est tournée vers la face de remplissage (4).

6. Système selon l'une des revendications précédentes, **caractérisé en ce que** l'élément filtrant (7) recouvre entièrement ou seulement en partie le fond de capsule (3).

7. Système selon l'une des revendications précédentes, **caractérisé en ce que** le fond de capsule (3) présente un point de rupture prédéterminé (104) qui est destiné à se rompre par contact mécanique avec un moyen de perforation externe (16).

8. Système selon l'une des revendications précédentes, **caractérisé en ce que** le fond de capsule (3) présente une ouverture de sortie (107) qui est de préférence fermée par un film (108), dans lequel le film (108) comprend de préférence une languette de décollement (109) permettant de décoller manuellement le film.
